# EUROPEAN PATENT APPLICATION

(11) **EP 4 280 744 A1**
(43) Date of publication of application: **22.11.2023**
(21) Application number: 21919096.4
(22) Date of filing: 16.12.2021
(51) Int. Cl.: H04W 72/04

(54) **RESOURCE ALLOCATION METHOD, RESOURCE SELECTION METHOD, DEVICE, AND STORAGE MEDIUM**

(30) Priority: 15.01.2021 CN 202110057381
(71) Applicant: ZTE Corporation, Shenzhen, Guangdong 518057 (CN)
(72) Inventor: LIU, Kun, Shenzhen, Guangdong 518057 (CN); DAI, Bo, Shenzhen, Guangdong 518057 (CN); FANG, Huiying, Shenzhen, Guangdong 518057 (CN)
(74) Representative: Aipex B.V.
(86) International application number: PCT/CN2021/138730
(87) International publication number: WO 2022/151908

(57) **Abstract**

Provided are a resource allocation method, a resource selection method, a device, and a storage medium. The resource allocation method includes configuring PRACH occasions occupied by a PRACH preamble corresponding to a first-type communication node and sending the PRACH occasions to the first-type communication node.

## Description

### TECHNICAL FIELD

The present application relates to communications, for example, a resource allocation method, a resource selection method, a device, and a storage medium.

### BACKGROUND

The New Radio (NR) system has higher configuration flexibility and wider application bandwidth than communication systems in the related art. Therefore, terminals with higher capability are required to support NR. However, the terminals supporting such high-performance are not needed in all scenarios, such as the scenario for wearable devices, the scenario for video surveillance, and the scenario for industrial wireless sensors. For these scenarios, an NR terminal with a reduced capability can meet the demands. This kind of reduced capability UE (RedCap UE) supports smaller bandwidth and fewer antennas.

As the RedCap UE has reduced bandwidth and a reduced number of antennas, both the transmission performance of an uplink channel and the reception performance of a downlink channel are inferior to that of a normal NR UE. Therefore, the RedCap UE needs to be enhanced on the uplink (UL) and the downlink (DL) to achieve the same transmission performance as the normal NR UE.

In the initial random access procedure, a base station does not know whether a UE is a RedCap UE. Therefore, it is necessary for a UE to send a Msg1 (PRACH preambles) to implicitly notify the base station whether the UE is a RedCap UE. Then, after receiving the PRACH preambles, the base station may select, according to the-type the UE, whether to subsequently enhance the UL channel and the DL channel for the UE. Therefore, how to allocate time-frequency resources for the RedCap UE is an urgent problem to be solved.

### SUMMARY

In view of this, embodiments of the present application provide a resource allocation method, a resource selection method, a device, and a storage medium so that time-frequency resources occupied by a first-type communication node are allocated.

Embodiments of the present application provide a resource allocation method. The method includes configuring PRACH occasions occupied by a PRACH preamble corresponding to a first-type communication node and sending the PRACH occasions to the first-type communication node.

Embodiments of the present application provide a resource allocation apparatus. The apparatus includes a configuration module and a sender. The configuration module is configured to configure PRACH occasions occupied by a physical random access channel (PRACH) preamble corresponding to a first-type communication node. The sender is configured to send the PRACH occasions to the first-type communication node.

Embodiments of the present application provide a resource selection method. The method includes receiving PRACH occasions sent by a fourth-type communication node and selecting a PRACH occasion occupied by a PRACH preamble from the PRACH occasions.

Embodiments of the present application provide a resource selection apparatus. The apparatus includes a receiver and a selector. The receiver is configured to receive PRACH occasions sent by a fourth-type communication node. The selector is configured to select a PRACH occasion occupied by a PRACH preamble from the PRACH occasions.

Embodiments of the present application provide a communication device. The device includes a communication module, a memory, and one or more processors. The communication module is configured to communicate between at least two communication nodes. The memory is configured to store one or more programs. The one or more processors, when executing the one or more programs, implement the method of any one of the preceding embodiments.

Embodiments of the present application provide a storage medium. The storage medium stores a computer program which, when executed by a processor, implements the method of any one of the preceding embodiments.

### BRIEF DESCRIPTION OF DRAWINGS

FIG. 1 is a flowchart of a random access procedure according to the related art.
FIG. 2 is a diagram illustrating the fallback process for CBRA of 2-step type of RA according to the related art.
FIG. 3 is a diagram illustrating the mapping relationship between an SSB and a preamble according to the related art.
FIG. 4 is a flowchart of a resource allocation method according to an embodiment of the present application.
FIG. 5 is a flowchart of a resource selection method according to an embodiment of the present application.
FIG. 6 is a diagram illustrating resource allocation according to an embodiment of the present application.
FIG. 7 is another diagram illustrating resource allocation according to an embodiment of the present application.
FIG. 8 is another diagram illustrating resource allocation according to an embodiment of the present application.
FIG. 9 is a block diagram of a resource allocation apparatus according to an embodiment of the present application.
FIG. 10 is a block diagram of a resource selection apparatus according to an embodiment of the present application.
FIG. 11 is a diagram illustrating the structure of a communication device according to an embodiment of the present application.

### DETAILED DESCRIPTION

Embodiments of the present application are described below in conjunction with drawings. The present application is described below in conjunction with accompanying drawings of the embodiments. The examples given are only used to explain the present application and are not intended to limit the scope of the present application.

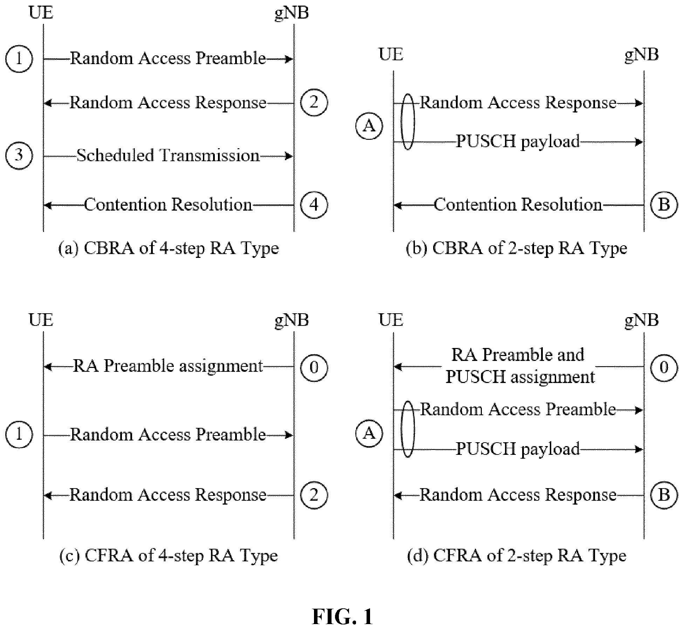

In the NR system, two types of random access (RA) procedures are supported, which are a 4-step type of RA for transmitting Msg1 and a 2-step type of RA for transmitting MsgA. FIG. 1 is a flowchart of a random access procedure according to the related art. As shown in FIG. 1, both types of RA procedures support contention based random access (CBRA) and contention free random access (CFRA).

The network does not configure both CFRA resource of 4-step type of RA and CFRA resource of 2-step type of RA for Bandwidth Part (BWP). CFRA of 2-step type of RA only supports handover.

Msg1 of 4-step type of RA consists of random access preambles of a Physical Random Access Channel (PRACH). After Msg1 is transmitted, UE listens for a network response within a configuration window. For CFRA, a dedicated preamble for Msg1 transmission is assigned by the network, and after receiving the random access response from the network, the UE ends the random access procedure, as shown in (c) in FIG. 1. For CBRA, after receiving the random access response, the UE sends Msg3 using the UL authorized in the response and monitors the contention result, as shown in (a) in FIG. 1. If the contention result is unsuccessful after Msg3 is transmitted or retransmitted, the UE returns to the Msg1 transmission.

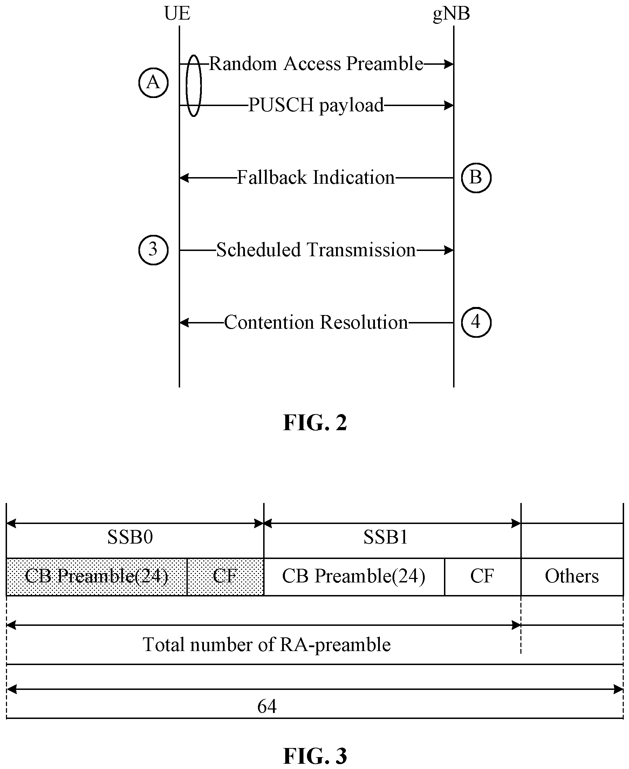

MsgA of 2-step type of RA includes a preamble on PRACH and the payload on Physical Uplink Shared Channel (PUSCH). After MsgA is transmitted, the UE listens for a network response within a configuration window. For CFRA, a dedicated preamble and a PUSCH resource are configured for the MsgA transmission, and after receiving the network response, the UE ends the random access procedure, as shown in (d) in FIG. 1. For CBRA, if the contention result is successful after the network response is received, the UE ends the random access procedure, as shown in (b) in FIG. 1. FIG. 2 is a diagram illustrating the fallback process for CBRA of 2-step type of RA according to the related art. As shown in FIG. 2, if a fallback indication is received in MsgB, the UE transmits Msg3 using an authorized UL in the fallback indication and monitors the contention result. If the contention result is unsuccessful, after Msg3 is transmitted or retransmitted, the UE returns to the MsgA transmission.

If the random access procedure of 2-step type of RA is not completed after multiple MsgA transmissions, the UE may be configured and switched to CBRA of 4-step type of RA.

The mapping relationship between a Synchronization Signal Block (SSB) and a PRACH occasion is as follows.

An SSB refers to an SS/PBCH block, which carries a downlink synchronization signal including a primary synchronization signal (PSS) , a secondary synchronization signal (SSS), and a physical broadcast channel (PBCH) carrying Master Information Block (MIB) information. Since NR supports multiple beam transmissions, the SSB also supports to be transmitted in multiple beam directions. To put it simply, multiple SSBs are supported to be transmitted in a time division manner.

A PRACH occasion refers to a time-frequency resource corresponding to sending of a PRACH preamble. At a same time point, multiple PRACH occasions may be included in the frequency domain. Meanwhile, periodic sending of the PRACH preamble in a time domain is supported.

Since NR has an SSB, a PRACH occasion and an SSB form a corresponding relationship in the random access procedure, that is, one PRACH occasion may correspond to one SSB or multiple SSBs, which are configured by the base station. A higher-layer parameter indicates the value of N, indicating that N SSBs correspond to one PRACH occasion. For contention based random access, a higher-layer parameter indicates N and R, indicating that N SSBs correspond to one PRACH occasion and each SSB corresponds to R preambles.

FIG. 3 is a diagram illustrating the mapping relationship between an SSB and a preamble according to the related art. As shown in FIG. 3, N = 2, and R = 24. When N = 2, it indicates that two SSBs correspond to one PRACH occasion. When R = 24, it indicates that 24 contention preambles correspond to one SSB. How many preambles in total corresponding to a SSB is indicated by totalNumberOfRA-Preambles, and one PRACH occasion corresponds to 64 preambles in total.

In an SSB cycle, under the indication of the SSB number configuration, the indication of PRACH occasion configuration, and the indication of parameters N and R, mapping between SSBs and PRACH occasions may be performed in the order of the time domain after the frequency domain.

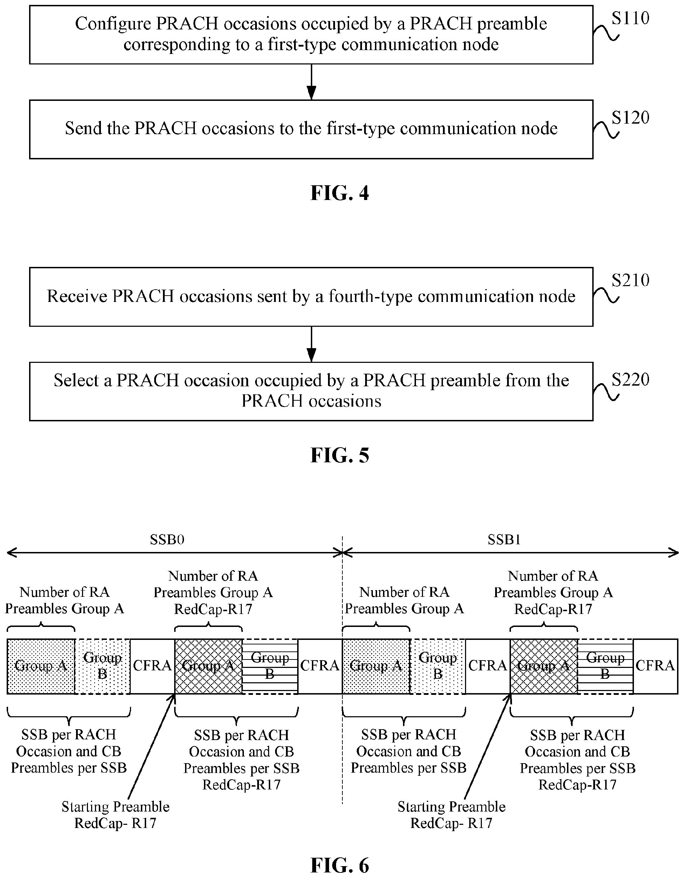

In an embodiment, FIG. 4 is a flowchart of a resource allocation method according to an embodiment of the present application. This embodiment may be performed by a fourth-type communication node. The fourth-type communication node may be a network side device (for example, a base station). As shown in FIG. 4, this method includes S110 and S 120.

S 110: PRACH occasions occupied by a PRACH preamble corresponding to a first-type communication node is configured.

S 120: The PRACH occasions are sent to the first-type communication node.

In embodiments, the first-type communication node refers to a RedCap UE, and the second-type communication node refers to an NR UE. In embodiments, the fourth-type communication node configures the PRACH occasions occupied by the PRACH preamble corresponding to the first-type communication node and the fourth-type communication node sends the PRACH occasions to the first-type communication node so that the first-type communication node transmits the PRACH preamble on a PRACH occasion corresponding to the first-type communication node. In embodiments, the first-type communication node uploads the PRACH preamble to the fourth-type communication node using the PRACH occasion corresponding to the first-type communication node, and after the fourth-type communication node receives the preceding PRACH preamble, the fourth-type communication node is possible to select whether to subsequently enhance the UL channel and the DL channel according to the type of the communication node. In the case where the communication node is the first-type communication node, the UL and DL channels are enhanced to achieve the same transmission performance as the second-type communication node. In an embodiment, the location of the PRACH occasions occupied by the PRACH preamble corresponding to the first-type communication node includes at least one of PRACH occasions occupied by a PRACH preamble corresponding to a second-type communication node, or, PRACH occasions dedicated to the first-type communication node. In embodiments, in a case where the location of the PRACH occasions occupied by the PRACH preamble corresponding to the first-type communication node includes the PRACH occasions occupied by the PRACH preamble corresponding to the second-type communication node, the PRACH occasions occupied by the PRACH preamble corresponding to the first-type communication node and the PRACH occasions occupied by the PRACH preamble corresponding to the second-type communication node share the same PRACH occasions. In embodiments, in a case where the location of the PRACH occasions occupied by the PRACH preamble corresponding to the first-type communication node includes the PRACH occasions dedicated to the first-type communication node, the first-type communication node and the second-type communication node use independent PRACH occasions to bear the sending of the PRACH preamble.

In an embodiment, in the case where the location of the PRACH occasions occupied by the PRACH preamble corresponding to the first-type communication node includes the PRACH occasions occupied by the PRACH preamble corresponding to the second-type communication node, the PRACH occasions occupied by the PRACH preamble corresponding to the first-type communication node are configured from a PRACH preamble corresponding to the second-type communication node for CFRA.

In an embodiment, configuring the PRACH occasions occupied by the PRACH preamble corresponding to the first-type communication node includes indicating, through first information, a start index of a PRACH preamble corresponding to the first-type communication node, or, taking an end index of a PRACH preamble configured for a second-type communication node plus K as a start index of a PRACH preamble corresponding to the first-type communication node, where K is an integer greater than or equal to 1.

In an embodiment, the end index of the PRACH preamble configured for the second-type communication node includes one of an end index of a first-type PRACH preamble in the case where the PRACH supports a first-type PRACH and an end index of a second-type PRACH preamble in the case where the PRACH supports a second-type PRACH.

In embodiments, the first-type PRACH refers to a 4-step PRACH, the second-type PRACH refers to a 2-step PRACH, the first-type PRACH preamble refers to a 4-step PRACH preamble, and the second-type PRACH preamble refers to a 2-step PRACH preamble.

In an embodiment, in the case where a first-type Msg3 and a second-type Msg3 are supported, the method includes one of: the end index of the first-type PRACH preamble being an end index of a preamble corresponding to the first-type Msg3 in the case where the first-type PRACH is supported, and the end index of the second-type PRACH preamble being an end index of a preamble corresponding to the first-type Msg3 in the case where the second-type PRACH is supported. In embodiments, the first-type Msg3 refers to Group B, and the second-type Msg3 refers to Group A.

In an embodiment, in the case where the first-type communication node is configured with a first-type PRACH, configuring the PRACH occasions occupied by the PRACH preamble corresponding to the first-type communication node includes: indicating, through second information, the number of PRACH preambles corresponding to the first-type communication node.

In an embodiment, in the case where the first-type communication node is configured with a first-type PRACH and a second-type PRACH, configuring the PRACH occasions occupied by the PRACH preamble corresponding to the first-type communication node includes: indicating, through second information, the number of first-type PRACH preambles corresponding to the first-type communication node and indicating, through the third information, the number of second-type PRACH preambles corresponding to the first-type communication node, where a start index of a second-type PRACH preamble is an end index of a first-type PRACH preamble configured for the second information plus one. In embodiments, the number of first-type PRACH preambles refers to the number of 4-step PRACH preambles, and the number of second-type PRACH preambles refers to the number of 2-step PRACH preambles.

In an embodiment, in the case where the first-type communication node supports a first-type Msg3, configuring the PRACH occasions occupied by the PRACH preamble corresponding to the first-type communication node includes: indicating, through the fourth information, the number of PRACH preambles corresponding to a second-type Msg3.

In an embodiment, in the case where the first-type communication node supports a first-type Msg3, configuring the PRACH occasions occupied by the PRACH preamble corresponding to the first-type communication node includes: indicating, through fourth information, the number of PRACH preambles corresponding to a second-type Msg3 of the first-type PRACH, and indicating, through fifth information, the number of PRACH preambles corresponding to a second-type Msg3 of the second-type PRACH.

In an embodiment, in the case where the first-type communication node includes a first-type terminal and a second-type terminal, configuring the PRACH occasions occupied by the PRACH preamble corresponding to the first-type communication node includes: indicating, through sixth information, the number of first-type PRACH preambles corresponding to the first-type terminal and indicating, through seventh information, the number of first-type PRACH preambles corresponding to the second-type terminal. In embodiments, the first-type terminal has a feature of BW Reduction without Antenna Size Reduction, and for the first-type terminal, only the bandwidth of Msg is needed to be configured; while, the second-type terminal has a feature of BW Reduction with Antenna Size Reduction, and for the second-type terminal, both the bandwidth configuration of Msg3 and the transmission of Msg are needed to be enhanced.

In an embodiment, in the case where the first-type communication node supports a first-type Msg3, configuring the PRACH occasions occupied by the PRACH preamble corresponding to the first-type communication node includes: indicating, through eighth information, the number of PRACH preambles corresponding to a second-type Msg3 of the first-type terminal, and indicating, through ninth information, the number of PRACH preambles corresponding to a second-type Msg3 of the second-type terminal.

In an embodiment, the PRACH occasions occupied by the PRACH preamble corresponding to the first-type communication node is used by the first-type communication node in the case where the initial BWP configured for the first-type communication node is greater than the operating BWP of the first-type communication node. In embodiments, the initial BWP may be the initial uplink BWP or initial downlink BWP. In the initial random access procedure, uplink messages (including Msg1 and Msg3) are sent on the initial uplink BWP, and downlink messages (including Msg2 and Msg4) are sent on the initial downlink BWP. In embodiments, the operating bandwidth of the first-type communication node may also be referred to the maximum bandwidth supported by the first-type communication node, configured bandwidth of the first-type communication node, default bandwidth of the first-type communication node, or scheduled bandwidth of the first-type communication node.

In an embodiment, in the case where the initial BWP configured for the first-type communication node is less than or equal to an operating BWP of the first-type communication node, the method includes one of: the PRACH occasions occupied by the PRACH preamble corresponding to the first-type communication node being PRACH occasions dedicated to the first-type communication node in the case where the first-type communication node supports or enables a function of Coverage Recovery (CR); and the PRACH occasions occupied by the PRACH preamble corresponding to the first-type communication node being PRACH occasions occupied by a PRACH preamble corresponding to a second-type communication node in the case where the first-type communication node does not support or enable a function of CR. In embodiments, the first-type communication node that supports or enables the function of CR may also be referred to as a first-type communication node whose Msg3 message supports the function of Coverage Recovery (CR), a first-type communication node whose Msg3 message supports a function of repeated transmission, a first-type communication node with a capability of antenna size limitation, a first-type communication node with a capability of device size limitation, a first-type communication node with limited coverage, or a first-type communication node whose measured value of downlink Reference Signal Received Power (RSRP) is less than or equal to a preset threshold. The preset threshold may be configured by a base station or may be preconfigured.

In an embodiment, the PRACH occasions occupied by the PRACH preamble corresponding to the first-type communication node includes one of PRACH occasions dedicated to the first-type communication node and PRACH occasions shared by a third-type communication node and the first-type communication node. The third-type communication node supports or enables a function of Coverage Enhancement (CE). The shared PRACH occasions are used for the first-type communication node and/or the third-type communication node to send a PRACH preamble.

In an embodiment, in the case where the PRACH occasions occupied by the PRACH preamble corresponding to the first-type communication node includes the PRACH occasions shared by the third-type communication node and the first-type communication node, communication node indication information is carried in a Msg3 message, and the communication node indication information is used for indicating that a communication node is the first-type communication node or the third-type communication node.

In an embodiment, in the case where the PRACH occasions occupied by the PRACH preamble corresponding to the first-type communication node includes the PRACH occasions shared by the third-type communication node and the first-type communication node, the size of a frequency domain resource occupied by a Msg3 message is less than or equal to the operating BWP of the first-type communication node.

In an embodiment, signaling is used to indicate whether the first-type communication node uses a PRACH preamble in a PRACH occasion corresponding to a second-type communication node. When the signaling indicating that the first-type communication node uses the PRACH occasions occupied by the PRACH preamble corresponding to the second-type communication node, the method includes at least one of that:
the PRACH occasions occupied by the PRACH preamble corresponding to the first-type communication node are PRACH occasions dedicated to the first-type communication node in the case where the first-type communication node supports or enables a function of CR; and
the PRACH occasions occupied by the PRACH preamble corresponding to the first-type communication node are PRACH occasions occupied by a PRACH preamble corresponding to a second-type communication node in the case where the first-type communication node does not support or enable a function of CR.

When the signaling indicates that the first-type communication node does not use the PRACH occasions occupied by the PRACH preamble corresponding to the second-type communication node, the PRACH occasions occupied by the PRACH preamble corresponding to the first-type communication node are PRACH occasions dedicated to the first-type communication node.

In embodiments, signaling explicitly indicates whether the first-type communication node can use the PRACH occasions occupied by the PRACH preamble corresponding to the second-type communication node. In the case where the signaling indicates that the first-type communication node can use the PRACH occasions occupied by the PRACH preamble corresponding to the second-type communication node, at least one of the following is included:
the PRACH occasions occupied by the PRACH preamble corresponding to the first-type communication node can be used by the first-type communication node in the case where the first-type communication node supports or enables the function of CR; and,
the PRACH occasions occupied by the PRACH preamble corresponding to the second-type communication node can be used by the first-type communication node in the case where the first-type communication node does not support or enable the function of CR.

In the case where the signaling indicates that the first-type communication node cannot use the PRACH occasions occupied by the PRACH preamble corresponding to the second-type communication node, the PRACH occasions occupied by the PRACH preamble corresponding to the first-type communication node can be used by the first-type communication node.

In an embodiment, FIG. 5 is a flowchart of a resource selection method according to an embodiment of the present application. The embodiment is applied to a first-type communication node. As shown in FIG. 5, this method includes S210 and S220.

S210: PRACH occasions sent by a fourth-type communication node is received.

S220: A PRACH occasion occupied by a PRACH preamble is selected from the PRACH occasions.

In an embodiment, the PRACH occasion occupied by the PRACH preamble and selected by the first-type communication node includes at least one of a PRACH occasion occupied by a PRACH preamble corresponding to a second-type communication node, or, a PRACH occasion dedicated to the first-type communication node.

In an embodiment, in the case where the PRACH occasion occupied by the PRACH preamble and selected by the first-type communication node includes the PRACH occasion occupied by the PRACH preamble corresponding to the second-type communication node, the PRACH occasion occupied by the PRACH preamble and corresponding to the first-type communication node is configured from a PRACH preamble corresponding to the second-type communication node for CFRA.

In an embodiment, the PRACH occasion occupied by the PRACH preamble and selected by the first-type communication node is a PRACH occasion dedicated to the first-type communication node in the case where the initial Bandwidth Part (BWP) configured for the first-type communication node is greater than the operating BWP of the first-type communication node.

In an embodiment, the initial BWP configured for the first-type communication node being less than or equal to an operating BWP of the first-type communication node includes one of that: the PRACH occasion occupied by the PRACH preamble and selected by the first-type communication node is a PRACH occasion dedicated to the first-type communication node in the case where the first-type communication node supports or enables a function of Coverage Recovery (CR); and the PRACH occasion occupied by the PRACH preamble and selected by the first-type communication node is a PRACH occasion occupied by a PRACH preamble corresponding to a second-type communication node in the case where the first-type communication node does not support or enable a function of CR.

In an embodiment, signaling is used to indicate whether the first-type communication node uses a PRACH occasion occupied by a PRACH preamble corresponding to a second-type communication node, and when the signaling indicates that the first-type communication node uses the PRACH occasion occupied by the PRACH preamble corresponding to the second-type communication node, at least one of the following is included:
the PRACH occasion occupied by the PRACH preamble and selected by the first-type communication node is a PRACH occasion dedicated to the first-type communication node in the case where the first-type communication node supports or enables a function of CR; and
the PRACH occasion occupied by the PRACH preamble and selected by the second-type communication node is a PRACH occasion occupied by a PRACH preamble corresponding to a second-type communication node in the case where the first-type communication node does not support or enable a function of CR.

When the signaling indicates that the first-type communication node does not use the PRACH occasion occupied by the PRACH preamble corresponding to the second-type communication node, the PRACH occasion occupied by the PRACH preamble and selected by the first-type communication node is a PRACH occasion dedicated to the first-type communication node.

In an embodiment, the case in which preambles of two SSBs are multiplexed for one RACH Occasion (RO), a 4-step PRACH is configured, the first-type communication node is a RedCap UE, and the second-type communication node is an NR UE is taken as example to describe the resource allocation process. RO refers to PRACH frequency domain resources (occasions). FIG. 6 is a diagram illustrating resource allocation according to an embodiment of the present application. As shown in FIG. 6, in SSB0 and SSB1, the PRACH occasions occupied by the PRACH preamble corresponding to RedCap UE is located in the PRACH occasions occupied by the PRACH preamble corresponding to the NR UE. Specifically, the first information is "Starting Preamble-RedCap-R17", the second information is "ssb-perRACH-OccasionAndCB-PreamblesPerSSB-RedCap-R17", and the fourth information is "numberOfRA-PreamblesGroupA-RedCap-R17".

In embodiments, "ssb-perRACH-OccasionAndCB-PreamblesPerSSB" is used to configure the number of preambles for one SSB in the NR UE. "NumberOfRA-PreamblesGroupA" is used to configure the number of preambles of Group A. In embodiments, the occasions occupied by the PRACH preamble and used by RedCap UE are the CFRA preamble occasions in the PRACH preamble used by NR UE, and the start index of the RedCap PRACH preamble is indicated by "Starting Preamble-RedCap-R17". If the start index of the RedCap PRACH preamble is not configured, the start index starts from the end index of the preamble configured for "ssb-perRACH-OccasionAndCB-PreamblesPerSSB" plus one by default. "ssb-perRACH-OccasionAndCB-PreamblesPerSSB-RedCap-R17" is used to indicate the number of PRACH preambles of RedCap UE. If RedCap UE supports Group B, "numberOfRA-PreamblesGroupA-RedCap-R17" is used to indicate the number of preambles corresponding to Group A.

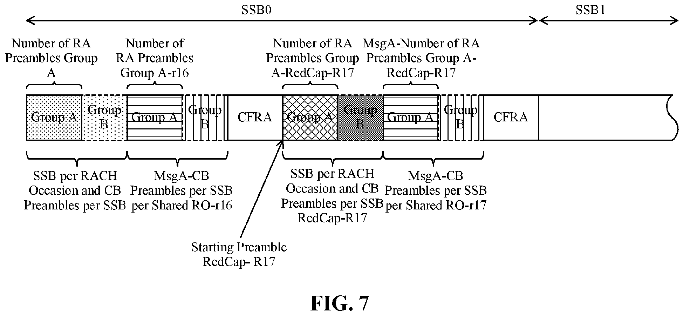

In an embodiment, the case in which preambles of two SSBs are multiplexed for one RO, a 4-step PRACH and a 2-step PRACH are configured, the first-type communication node is a RedCap UE, and the second-type communication node is an NR UE is taken as an example to describe a resource allocation process. RO refers to PRACH frequency domain resources (occasions). FIG. 7 is another diagram illustrating resource allocation according to an embodiment of the present application. As shown in FIG. 7, in SSB0 and SSB1, the PRACH occasions occupied by the PRACH preamble corresponding to RedCap UE is located in the PRACH occasions occupied by the PRACH preamble corresponding to the NR UE. Specifically, the first information is "Starting Preamble-RedCap-R17", the second information is "ssb-perRACH-OccasionAndCB-PreamblesPerSSB-RedCap-R17", the third information is "MsgA-CB-PreamblesPerSSB-PerSharedRO-r17", the fourth information is "numberOfRA- PreamblesGroupA-RedCap-R17", and the fifth information is "MsgA-numberOfRA-PreamblesGroupA-RedCap-R17".

In embodiments, "ssb-perRACH-OccasionAndCB-PreamblesPerSSB" is used to configure the number of 4-step RACH Preambles configured for one SSB in NR UE. "NumberOfRA-PreamblesGroupA" is used to configure the number of preambles of Group A. "MsgA-CB-PreamblesPerSSB-PerSharedRO-R16" is used to configure the number of 2-step RACH Preambles configured for one SSB in NR UE. "NumberOfRA-PreamblesGroupA-R16" is used to configure the number of preambles of Group A.

In embodiments, the PRACH preamble occasion used by RedCap UE occupies the Preamble occasion of the CFRA in the NR UE PRACH preamble, and the start index of the RedCap PRACH preamble is indicated by "Starting Preamble-RedCap-R17". If the start index of the RedCap PRACH preamble is not configured, the start index starts from the end index of the preamble configured for "ssb-perRACH-OccasionAndCB-PreamblesPerSSB" and "MsgA-CB-PreamblesPerSSB-PerSharedRO-r16" plus one by default. "ssb-perRACH-OccasionAndCB-PreamblesPerSSB-RedCap-R17" is used to indicate the number of 4-step PRACH preambles of RedCap UE; "MsgA-CB-PreamblesPerSSB-PerSharedRO-r17" is used to indicate the number of 2-step PRACH preambles of RedCap UE; and the start index of the 2-step PRACH preamble of RedCap UE is the preamble ending index configured by "ssb-perRACH-OccasionAndCB-PreamblesPerSSB-RedCap-R17" plus one. If RedCap UE supports Group B, "numberOfRA-PreamblesGroupA-RedCap-R17" is used to indicate the number of preambles corresponding to Group A of 4-step PRACH, and "MsgA-numberOfRA-PreamblesGroupA-RedCap-R17" is used to indicate the number of preambles corresponding to Group A of 2-step PRACH.

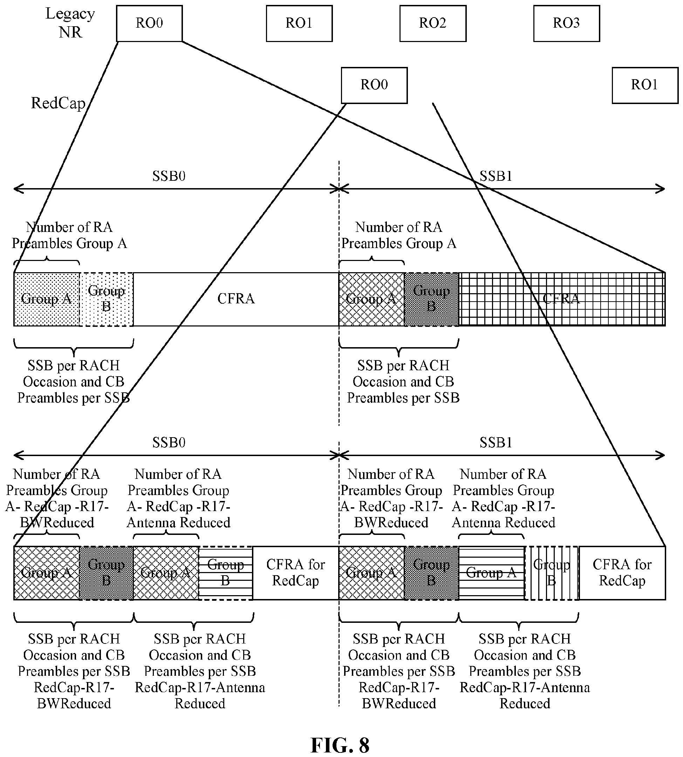

In an embodiment, a resource allocation process is described by taking the case in which preambles of two SSBs are multiplexed for one RO, the first-type communication node is a RedCapUE, the second-type communication node is an NR UE, and a 4-step PRACH is configured as an example. FIG. 8 is another diagram illustrating resource allocation according to an embodiment of the present application. As shown in FIG. 8, RedCap UE and NR UE use independent PRACH occasions to carry the sending of the PRACH preamble. In embodiments, only a 4-step PRACH is configured, and a 2-step PRACH is not configured. However, it does not means that a 2-step PRACH cannot be supported in this solution, A solution similar to the preceding solution may be used to support the preamble configuration of a 2-step PRACH.

In embodiments, the sixth information is "ssb-perRACH-OccasionAndCB-PreamblesPerSSB-RedCap-R17-BWReduced", the seventh information is "ssb-perRACH-OccasionAndCB-PreamblesPerSSB-RedCap-R17-AntennaReduced", the eighth information is "numberOfRA-PreamblesGroupA-RedCap-R17-BWReduced", and the ninth information is "numberOfRA-PreamblesGroupA-RedCap-R17-AntennaReduced". In embodiments, the sixth information is used to indicate the number of 4-step PRACH preambles of the first-type terminal (that is, UE Type 1 RedCap), and the seventh information is used to indicate the number of 4-step PRACH preambles of the second-type terminal (that is, UE Type 2 RedCap).

If RedCap UE supports Group B, the eighth information is used to indicate the number of Group A PRACH preambles of UE Type 1 RedCap, and the ninth information is used to indicate the number of Group A PRACH preambles of UE Type 2 RedCap.

In the description of the preceding embodiments, the first-type communication node refers to a RedCap UE, and the second-type communication node refers to an NR UE.

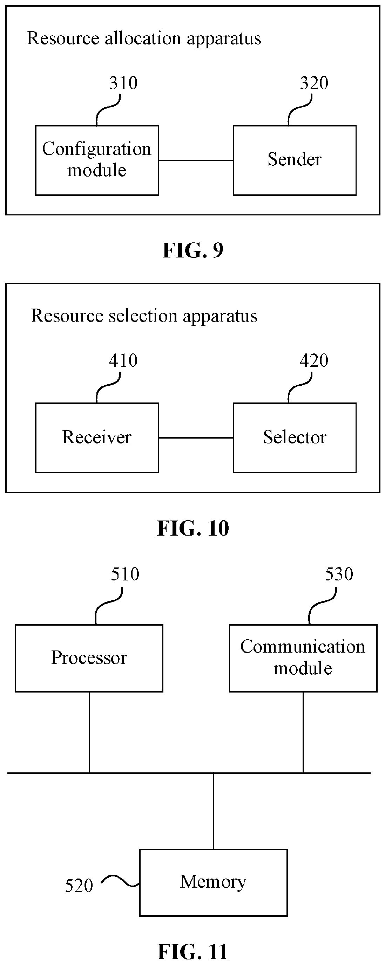

In an embodiment, FIG. 9 is a block diagram of a resource allocation apparatus according to an embodiment of the present application. This embodiment is performed by a fourth-type communication node. The fourth-type communication node may be a network side device (for example, a base station). As shown in FIG. 9, this apparatus includes a configuration module 310 and a sender 320.

The configuration module 310 is configured to configure PRACH occasions occupied by a Physical Random Access Channel (PRACH) preamble corresponding to a first-type communication node.

The sender 320 is configured to send the PRACH occasions to the first-type communication node.

In an embodiment, the PRACH occasions occupied by the PRACH preamble corresponding to the first-type communication node include at least one of PRACH occasions occupied by a PRACH preamble corresponding to a second-type communication node, or, PRACH occasions dedicated to the first-type communication node.

In an embodiment, in the case where the PRACH occasions occupied by the PRACH preamble corresponding to the first-type communication node includes PRACH occasions occupied by a PRACH preamble corresponding to a second-type communication node, the PRACH occasions occupied by the PRACH preamble corresponding to the first-type communication node is configured from PRACH preambles corresponding to the second-type communication node for CFRA.

In an embodiment, configuring the PRACH occasions occupied by the PRACH preamble corresponding to the first-type communication node includes indicating, through first information, a start index of a PRACH preamble corresponding to the first-type communication node or taking an end index of a PRACH preamble configured for a second-type communication node plus K as a start index of a PRACH preamble corresponding to the first-type communication node, where K is an integer greater than or equal to 1.

In an embodiment, the end index of the PRACH preamble configured for the second-type communication node includes one of an end index of a first-type PRACH preamble in the case where the PRACH supports a first-type PRACH and an end index of a second-type PRACH preamble in the case where the PRACH supports a second-type PRACH.

In an embodiment, in a case where a first-type Msg3 and a second-type Msg3 are supported, the end index of the first-type PRACH preamble is an end index of a preamble corresponding to the first-type Msg3 in the case where the first-type PRACH is supported, or, the end index of the second-type PRACH preamble is an end index of a preamble corresponding to the first-type Msg3 in the case where the second-type PRACH is supported.

In an embodiment, in the case where the first-type communication node is configured with a first-type PRACH, configuring the PRACH occasions occupied by the PRACH preamble corresponding to the first-type communication node includes indicating, through second information, the number of PRACH preambles corresponding to the first-type communication node.

In an embodiment, in the case where the first-type communication node is configured with a first-type PRACH and a second-type PRACH, configuring the PRACH occasions occupied by the PRACH preamble corresponding to the first-type communication node includes: indicating, through second information, the number of first-type PRACH preambles corresponding to the first-type communication node and indicating, through third information, the number of second-type PRACH preambles corresponding to the first-type communication node. A start index of a second-type PRACH preamble is an end index of a first-type PRACH preamble configured for the second information plus one.

In an embodiment, in the case where the first-type communication node supports a first-type Msg3, the number of PRACH preambles corresponding to a second-type Msg3 is indicated through the fourth information.

In an embodiment, in the case where the first-type communication node supports a first-type Msg3, the number of PRACH preambles corresponding to a second-type Msg3 of the first-type PRACH is indicated through the fourth information, and the number of PRACH preambles corresponding to a second-type Msg3 of the second-type PRACH is indicated through the fifth information.

In an embodiment, in the case where the first-type communication node includes a first-type terminal and a second-type terminal, configuring the PRACH occasions occupied by the PRACH preamble corresponding to the first-type communication node includes indicating, through sixth information, the number of first-type PRACH preambles corresponding to the first-type terminal and indicating, through seventh information, the number of first-type PRACH preambles corresponding to the second-type terminal.

In an embodiment, in the case where the first-type communication node supports a first-type Msg3, the number of PRACH preambles corresponding to a second-type Msg3 of the first-type terminal is indicated through the eighth information, and the number of PRACH preambles corresponding to a second-type Msg3 of the second-type terminal is indicated through the ninth information.

In an embodiment, the PRACH occasions occupied by the PRACH preamble corresponding to the first-type communication node is used by the first-type communication node in the case where the initial Bandwidth Part (BWP) configured for the first-type communication node is greater than the operating BWP of the first-type communication node.

In an embodiment, in the case where the initial BWP configured for the first-type communication node is less than or equal to an operating BWP of the first-type communication node, the PRACH occasions occupied by the PRACH preamble corresponding to the first-type communication node is used by the first-type communication node in the case where the first-type communication node supports or enables a function of CR, or, PRACH occasions occupied by a PRACH preamble corresponding to a second-type communication node is used by the first-type communication node in the case where the first-type communication node does not support or enable a function of CR.

In an embodiment, the PRACH occasions occupied by the PRACH preamble corresponding to the first-type communication node includes one of PRACH occasions dedicated to the first-type communication node and PRACH occasions shared by a third-type communication node and the first-type communication node. The third-type communication node supports or enables a function of CE. The shared PRACH occasions are used for the first-type communication node and/or the third-type communication node to send a PRACH preamble.

In an embodiment, in the case where the PRACH occasions occupied by the PRACH preamble corresponding to the first-type communication node includes the PRACH occasions shared by the third-type communication node and the first-type communication node, communication node indication information is carried in a Msg3 message, and the communication node indication information is used for indicating that a communication node is the first-type communication node or the third-type communication node.

In an embodiment, in the case where the PRACH occasions occupied by the PRACH preamble corresponding to the first-type communication node includes the PRACH occasions shared by the third-type communication node and the first-type communication node, the size of a frequency domain resource occupied by a Msg3 message is less than or equal to the operating BWP of the first-type communication node.

In an embodiment, signaling is used to indicate whether the first communication node uses PRACH occasions occupied by the PRACH preamble corresponding to a second-type communication node. In the case where the signaling indicates that the first-type communication node uses the PRACH occasions occupied by the PRACH preamble corresponding to the second-type communication node, at least one of the following is included:
the PRACH occasions occupied by the PRACH preamble corresponding to the first-type communication node is used by the first-type communication node in the case where the first-type communication node supports or enables the function of CR, or,
the PRACH occasions occupied by the PRACH preamble corresponding to the second-type communication node is used by the first-type communication node in the case where the first-type communication node does not support or enable the function of CR.

In the case where the signaling indicates that the first-type communication node does not use the the PRACH occasions occupied by the PRACH preamble corresponding to the second-type communication node, the PRACH occasions occupied by the PRACH preamble corresponding to the first-type communication node is used by the first-type communication node.

The resource allocation apparatus provided in this embodiment is configured to implement the resource allocation method of the embodiment shown in FIG. 4. The implementation principle and technical effect of the resource allocation apparatus provided in this embodiment are similar, which is not repeated herein.

In an embodiment, FIG. 10 is a block diagram of a resource selection apparatus according to an embodiment of the present application. This embodiment is performed by a first-type communication node. The first communication node may be a terminal side. In embodiments, the first-type communication node is a RedCap UE. As shown in FIG. 10, this embodiment includes a receiver 410 and a selector 420.

The receiver 410 is configured to receive PRACH occasions sent by a fourth-type communication node.

The selector 420 is configured to select a PRACH occasion occupied by a PRACH preamble from the PRACH occasions.

In an embodiment, the PRACH occasion occupied by the PRACH preamble and selected by the first-type communication node includes at least one of a PRACH occasion occupied by a PRACH preamble corresponding to a second-type communication node, or, a PRACH occasion dedicated to the first-type communication node.

In an embodiment, in the case where the PRACH occasion occupied by the PRACH preamble and selected by the first-type communication node includes the PRACH occasion occupied by the PRACH preamble corresponding to the second-type communication node, a PRACH occasion occupied by a PRACH preamble and corresponding to the first-type communication node is configured from a PRACH preamble corresponding to the second-type communication node for CFRA.

In an embodiment, the PRACH occasion occupied by the PRACH preamble and selected by the first-type communication node is a PRACH occasion dedicated to the first-type communication node in the case where the initial BWP configured for the first-type communication node is greater than the operating BWP of the first-type communication node.

In an embodiment, in the case where the initial BWP configured for the first-type communication node is less than or equal to an operating BWP of the first-type communication node, one of the following is included: the PRACH occasion occupied by the PRACH preamble and selected by the first-type communication node is a PRACH occasion dedicated to the first-type communication node in the case where the first-type communication node supports or enables a function of CR; and, the PRACH occasion occupied by the PRACH preamble and selected by the first-type communication node is a PRACH occasion occupied by a PRACH preamble corresponding to a second-type communication node in a case where the first-type communication node does not support or enable a function of CR.

In an embodiment, signaling is used to indicate whether the first-type communication node uses PRACH occasions occupied by the PRACH preamble corresponding to the second-type communication node. In the case where the signaling indicates that the first-type communication node uses the PRACH occasion occupied by the PRACH preamble corresponding to the second-type communication node, at least one of the following is included:
the PRACH occasions occupied by the PRACH preamble corresponding to the first-type communication node is used by the first-type communication node in the case where the first-type communication node supports or enables the function of CR, or,
the PRACH occasions occupied by the PRACH preamble corresponding to the second-type communication node is used by the first-type communication node in the case where the first-type communication node does not support or enable the function of CR.

In the case where the signaling indicates that the first-type communication node does not use the PRACH occasions occupied by the PRACH preamble corresponding to the second-type communication node, the PRACH occasions occupied by the PRACH preamble corresponding to the first-type communication node is used by the first-type communication node.

The resource selection apparatus provided in this embodiment is configured to implement the resource selection method of the embodiment shown in FIG. 5. The implementation principle and technical effect of the resource selection apparatus provided in this embodiment are similar, which is not repeated herein.

FIG. 11 is a diagram illustrating the structure of a communication device according to an embodiment of the present application. As shown in FIG. 11, the communication device provided in the present application includes a processor 510, a memory 520, and a communication module 530. One or more processors 510 may be provided in the device, and one processor 510 is shown as an example in FIG. 11. One or more memories 520 may be provided in the device, and one memory 520 is shown as an example in FIG. 11. The processor 510, the memory 520, and the communication module 530 in the device may be connected via a bus or via other manners, and the processor 510, the memory 520, and the communication module 530 in the device connected via a bus is shown as an example in FIG. 11. In this embodiment, the device may be a network side device (for example, a base station).

The memory 520, as a computer-readable storage medium, may be configured to store software programs, computer-executable programs, and modules such as program instructions/modules (such as a configuration module and a sender in the resource allocation apparatus) corresponding to the device in any embodiment of the present application. The memory 520 may include a program storage region and a data storage region. The program storage region may store an operating system and an application program required by at least one function. The data storage region may store data created according to the use of the device. Additionally, the memory 520 may include a high-speed random-access memory and may also include a nonvolatile memory such as at least one disk memory, flash memory, or another nonvolatile solid-state memory. In some examples, the memory 520 may also include memories located remotely relative to the processor 510, and these remote memories may be connected to the device via a network. Examples of the preceding network include, but are not limited to, the Internet, an intranet, a local area network, a mobile communication network, and a combination thereof.

The communication module 530 is configured to perform communication interaction between a first-type communication node, a second-type communication node, and an other-type communication node. For example, the other-type communication node may be a third-type communication node and/or a fourth-type communication node.

In the case where the communication device is a fourth-type communication node, the preceding device may be configured to execute the resource allocation method provided in any one of the preceding embodiments and has corresponding functions and effects.

In the case where the device is a first-type communication node, the preceding device may be configured to execute the resource selection method provided in any one of the preceding embodiments and has corresponding functions and effects.

Embodiments of the present application also provides a storage medium including computer-executable instructions which, when executed by a computer processor, implements a resource allocation method applied to a fourth-type communication node. The resource allocation method includes configuring PRACH occasions occupied by a PRACH preamble corresponding to a first-type communication node and sending the PRACH occasions to the first-type communication node.

Embodiments of the present application also provides a storage medium including computer-executable instructions which, when executed by a computer processor, implements a resource selection method applied to a first-type communication node. The resource selection method includes receiving PRACH occasions sent by a fourth-type communication node and selecting a PRACH occasion occupied by a PRACH preamble from the PRACH occasions. The storage medium including computer-executable instructions may be a non-transitory computer-readable storage medium.

It is to be understood by those skilled in the art that the term "user equipment" covers any suitable-type wireless user equipment, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or other calculation apparatuses, nevertheless the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, micro-codes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions.

Computer programs may be stored in a memory. The memory may be of any type suitable for a local technical environment and may be implemented using any suitable data storage technology such as, but not limited to, a read-only memory (ROM), a random-access memory (RAM), or an optical memory device and system (a digital video disc (DVD) or a compact disc (CD)). Computer-readable medium may include a non-transitory storage medium. The data processor may be of any type suitable to the local technical environment, such as, but not limited to, a general-purpose computer, a special-purpose computer, a microprocessor, a digital signal processing (DSP), an application specific integrated circuit (ASIC), a field-programmable gate array (FGPA), and a processor based on a multi-core processor architecture.

The above are merely preferred embodiments of the present application and are not intended to limit the present application. For those skilled in the art, the present application may have various modifications and variations. Any modifications, equivalent substitutions, improvements and the like made within the spirit and principle of the present application should fall within the scope of the present application.

## Claims

1. A resource allocation method, applied to a fourth-type communication node, comprising:
configuring physical random access channel, PRACH, occasions occupied by a PRACH preamble corresponding to a first-type communication node; and
sending the PRACH occasions to the first-type communication node.

2. The method of claim 1, wherein the PRACH occasions occupied by the PRACH preamble corresponding to the first-type communication node comprises at least one of:
PRACH occasions occupied by a PRACH preamble corresponding to a second-type communication node, or, PRACH occasions dedicated to the first-type communication node.

3. The method of claim 2, wherein in a case where the PRACH occasions occupied by the PRACH preamble corresponding to the first-type communication node comprises the PRACH occasions occupied by the PRACH preamble corresponding to the second-type communication node, the PRACH occasions occupied by the PRACH preamble corresponding to the first-type communication node is configured from a PRACH preamble corresponding to the second-type communication node for contention free random access, CFRA.

4. The method of claim 1, wherein configuring the PRACH occasions occupied by the PRACH preamble corresponding to the first-type communication node comprises:
indicating, through first information, a start index of the PRACH preamble corresponding to the first-type communication node; or,
taking an end index of a PRACH preamble configured for a second-type communication node plus K as a start index of the PRACH preamble corresponding to the first-type communication node, wherein K is an integer greater than or equal to 1.

5. The method of claim 4, wherein the end index of the PRACH preamble configured for the second-type communication node comprises one of:
in a case where the PRACH supports a first-type PRACH, the end index of the PRACH preamble configured for the second-type communication node being an end index of the first-type PRACH preamble; and
in a case where the PRACH supports a second-type PRACH, the end index of the PRACH preamble configured for the second-type communication node being an end index of a second-type PRACH preamble.

6. The method of claim 5, wherein in a case where the first-type communication node supports a first-type Msg3, the method comprises one of:
in a case where the first-type PRACH is supported, the end index of the first-type PRACH preamble is an end index of a preamble corresponding to the first-type Msg3; or,
in a case where the second-type PRACH is supported, the end index of the second-type PRACH preamble is an end index of a preamble corresponding to the first-type Msg3.

7. The method of claim 1, wherein in a case where the first-type communication node is configured with a first-type PRACH, configuring the PRACH occasions occupied by the PRACH preamble corresponding to the first-type communication node further comprises:
indicating, through second information, a number of PRACH preambles corresponding to the first-type communication node.

8. The method of claim 1, wherein in a case where the first-type communication node is configured with a first-type PRACH and a second-type PRACH, configuring the PRACH occasions occupied by the PRACH preamble corresponding to the first-type communication node comprises:
indicating, through second information, a number of first-type PRACH preambles corresponding to the first-type communication node; and
indicating, through third information, a number of second-type PRACH preambles corresponding to the first-type communication node, wherein a start index of a second-type PRACH preamble of the second-type PRACH preambles is an end index of a first-type PRACH preamble configured for the second information plus one.

9. The method of claim 7, wherein in a case where the first-type communication node supports a first-type Msg3, configuring the PRACH occasions occupied by the PRACH preamble corresponding to the first-type communication node comprises:
indicating, through fourth information, a number of PRACH preambles corresponding to a second-type Msg3.

10. The method of claim 8, wherein in a case where the first-type communication node supports a first-type Msg3, configuring the PRACH occasions occupied by the PRACH preamble corresponding to the first-type communication node comprises:
indicating, through fourth information, a number of PRACH preambles corresponding to a second-type Msg3 of the first-type PRACH; and
indicating, through fifth information, a number of PRACH preambles corresponding to a second-type Msg3 of the second-type PRACH.

11. The method of claim 1, wherein in a case where the first-type communication node comprises a first-type terminal and a second-type terminal, configuring the PRACH occasions occupied by the PRACH preamble corresponding to the first-type communication node comprises:
indicating, through sixth information, a number of first-type PRACH preambles corresponding to the first-type terminal; and
indicating, through seventh information, a number of first-type PRACH preambles corresponding to the second-type terminal.

12. The method of claim 11, wherein in a case where the first-type communication node supports a first-type Msg3, configuring the PRACH occasions occupied by the PRACH preamble corresponding to the first-type communication node comprises:
indicating, through eighth information, a number of PRACH preambles corresponding to a second-type Msg3 of the first-type terminal; and
indicating, through ninth information, a number of PRACH preambles corresponding to a second-type Msg3 of the second-type terminal.

13. The method of claim 1, wherein in a case where an initial Bandwidth Part, BWP, configured for the first-type communication node is greater than an operating BWP of the first-type communication node, the PRACH occasions occupied by the PRACH preamble corresponding to the first-type communication node is used by the first-type communication node.

14. The method of claim 1, wherein in a case where an initial BWP configured for the first-type communication node is less than or equal to an operating BWP of the first-type communication node, comprising one of:
in a case where the first-type communication node supports or enables a function of coverage recovery, CR, the PRACH occasions occupied by the PRACH preamble corresponding to the first-type communication node are used by the first-type communication node; and
in a case where the first-type communication node does not support or enable a function of CR, PRACH occasions occupied by a PRACH preamble corresponding to a second-type communication node are used by the first-type communication node.

15. The method of claim 13 or 14, wherein the PRACH occasions occupied by the PRACH preamble corresponding to the first-type communication node comprises one of:
PRACH occasions dedicated to the first-type communication node; and
PRACH occasions shared by a third-type communication node and the first-type communication node; wherein
the third-type communication node supports or enables a function of Coverage Enhancement, CE, and the PRACH occasions shared by the third-type communication node and the first-type communication node are used for at least one of the following communication nodes to send a PRACH preamble: the first-type communication node, or, the third-type communication node.

16. The method of claim 15, wherein in a case where the PRACH occasions occupied by the PRACH preamble corresponding to the first-type communication node comprises the PRACH occasions shared by the third-type communication node and the first-type communication node, communication node indication information is carried in a Msg3 message, and the communication node indication information is used for indicating that a communication node is the first-type communication node or the third-type communication node.

17. The method of claim 15, wherein in a case where the PRACH occasions occupied by the PRACH preamble corresponding to the first-type communication node comprises the PRACH occasions shared by the third-type communication node and the first-type communication node, a size of a frequency domain resource occupied by a Msg3 message is less than or equal to the operating BWP of the first-type communication node.

18. The method of claim 1, wherein signaling is used to indicate whether the first-type communication node uses PRACH occasions occupied by a PRACH preamble corresponding to a second-type communication node;
in a case where the signaling indicates that the first-type communication node uses the PRACH occasions occupied by the PRACH preamble corresponding to the second-type communication node, the method comprises at least one of:
in a case where the first-type communication node supports or enables a function of CR, the PRACH occasions occupied by the PRACH preamble corresponding to the first-type communication node are used by the first-type communication node; and
in a case where the first-type communication node does not support or enable a function of CR, the PRACH occasions occupied by the PRACH preamble corresponding to the second-type communication node are used by the first-type communication node; or,
in a case where the signaling indicates that the first-type communication node does not use the PRACH occasions occupied by the PRACH preamble corresponding to the second-type communication node, the method comprises:
the PRACH occasions occupied by the PRACH preamble corresponding to the first-type communication node are used by the first-type communication node.

19. A resource selection method, applied to a first-type communication node, comprising:
receiving physical random access channel, PRACH, occasions sent by a fourth-type communication node; and
selecting a PRACH occasion occupied by a PRACH preamble from the PRACH occasions.

20. The method of claim 19, wherein the PRACH occasion occupied by the PRACH preamble and selected by the first-type communication node comprises at least one of:
a PRACH occasion occupied by a PRACH preamble corresponding to a second-type communication node, or, a PRACH occasion dedicated to the first-type communication node.

21. The method of claim 19, wherein in a case where the PRACH occasion occupied by the PRACH preamble and selected by the first-type communication node comprises the PRACH occasion occupied by the PRACH preamble corresponding to the second-type communication node, the PRACH occasion occupied by the PRACH preamble corresponding to the first-type communication node is configured from a PRACH preamble corresponding to the second-type communication node for contention free random access, CFRA.

22. The method of claim 19, wherein in a case where an initial Bandwidth Part, BWP, configured for the first-type communication node is greater than an operating BWP of the first-type communication node, the PRACH occasion occupied by the PRACH preamble and selected by the first-type communication node is a PRACH occasion dedicated to the first-type communication node.

23. The method of claim 19, wherein in a case where an initial BWP configured for the first-type communication node is less than or equal to an operating BWP of the first-type communication node, the method comprises one of:
in a case where the first-type communication node supports or enables a function of coverage recovery, CR, the PRACH occasion occupied by the PRACH preamble and selected by the first-type communication node is a PRACH occasion dedicated to the first-type communication node; and
in a case where the first-type communication node does not support or enable a function of CR, the PRACH occasion occupied by the PRACH preamble and selected by the first-type communication node is a PRACH occasion occupied by a PRACH preamble corresponding to a second-type communication node.

24. The method of claim 19, wherein signaling is used to indicate whether the first-type communication node uses a PRACH occasion occupied by a PRACH preamble corresponding to a second-type communication node;
wherein in a case where the signaling indicates that the first-type communication node uses the PRACH occasion occupied by the PRACH preamble corresponding to the second-type communication node, the method comprises at least one of:
in a case where the first-type communication node supports or enables a function of CR, the PRACH occasion occupied by the PRACH preamble and selected by the first-type communication node is a PRACH occasion dedicated to the first-type communication node; and,
in a case where the first-type communication node does not support or enable a function of CR, the PRACH occasion occupied by the PRACH preamble and selected by the first-type communication node is a PRACH occasion occupied by a PRACH preamble corresponding to a second-type communication node; and
wherein in a case where the signaling indicates that the first-type communication node does not use the PRACH occasion occupied by the PRACH preamble corresponding to the second-type communication node, the method comprises:
the PRACH occasion occupied by the PRACH preamble and selected by the first-type communication node is a PRACH occasion dedicated to the first-type communication node.

25. A communication device, comprising a communication module, a memory, and one or more processors; wherein
the communication module is configured to perform communication interaction between a first-type communication node, a second-type communication node, and an other-type communication node;
the memory is configured to store one or more programs; and
the one or more processors, when executing the one or more programs, implement the method of any one of claims 1 to 24.

26. A storage medium storing a computer program that, when executed by a processor, implements the method of any one of claims 1 to 24.
